# EUROPÄISCHE PATENTSCHRIFT

(11) **EP 0 563 803 B1**
(45) Veröffentlichungstag und Bekanntmachung des Hinweises auf die Patenterteilung: **13.03.1996**
(21) Anmeldenummer: 93104987.8
(22) Anmeldetag: 25.03.1993
(51) Int. Cl.: H02B 13/035

(54) **Hochspannungsschaltfeld**
High voltage switchboard
Poste de commutation à haute tension

(30) Priorität: 30.03.1992 DE 4210370
(43) Veröffentlichungstag der Anmeldung: 06.10.1993
(73) Patentinhaber: ABB PATENT GmbH, D-68309 Mannheim (DE)
(72) Erfinder: Peitz, Theo, W-6450 Hanau 9 (DE); Neumaier, Heinrich, W-7613 Hausach (DE); Probst, Heinrich, W-8752 Blankenbach (DE)
(74) Vertreter: Rupprecht, Klaus, Dipl.-Ing.

(56) Entgegenhaltungen:
- EP-A- 0 463 490
- DE-A- 2 539 996

## Beschreibung

Die Erfindung betrifft ein metallgekapseltes, gasisoliertes Hochspannungsschaltfeld gemäß Oberbegriff des Anspruches 1.

Ein solches Feld ist aus der BBC-Druckschrift DSI102788D, Seite 5 vom Januar 1988 bekannt. Vom bekannten zentralen Leistungsschaltergehäuse gehen beidseitig Rohransätze ab, an denen Sammelschienengehäuse angeflanscht sind. An einem weiteren Rohransatz ist das Gehäuse eines Durchführungsstromwandlers angeflanscht. Der Leistungsschalter wird über im Leistungsschaltergehäuse innen angeordnete Isolierstütze gehalten.

Dieses Schaltfeld baut großräumig; es benötigt ein in axialer Richtung ausladendes Leistungsschaltergehäuse und ferner ein quer dazu die Schaltfeldlänge mitbestimmendes, separates Stromwandlergehäuse.

Die Erfindung hat sich die Aufgabe gestellt, das zugrundegelegte Schaltfeld wesentlich kompakter sowie montagefreundlicher auszugestalten.

Dies gelingt mit den kennzeichnenden Merkmalen des Anspruches 1.

Durch die hintereinander auf einer Linie angeordneten Schalterpole wird seitlich dieser Fluchtraum im zylindrischen Gehäuse für die Zu- bzw. Ausleitungen bzw. deren Anschlüsse geschaffen.

Dadurch, daß kein Befestigungsstützer von den Schalterpolen zu dem sie umgebenden geerdeten Gehäuse geführt sind, ist die Kriechstromfestigkeit des Leistungsschalters wesentlich verbessert. Dies ist besonders deshalb beachtlich, da die gewöhnlich verwendeten Leistungsschalterpole mit SF₆-Gas löschen und in das sie umgebende Schaltergehäuse auspuffen. Nunmehr können auch die Polgehäuse näher zum geerdeten Schaltergehäuse gerückt werden, was einer insgesamt kürzeren Bauweise zugute kommt.

Der erzielte Raumgewinn kann vorteilhaft auch von dem obligatorischen Durchführungsstromwandler genutzt werden, dessen Aktivteile nunmehr zum Teil in das Leistungsschaltergehäuse hinein verschoben werden können. Daher kann der für ihn bestimmte Rohransatz am Schaltgerhäuse kürzer gehalten werden.

Keine Probleme bereitet es auch, wenn nunmehr zwei übereinander angeordnete Sammelschienensysteme an einer Seite des Schaltergehäuses entlanggeführt werden. Deren Zu- bzw. Ausleitungen an die Leistungsschalterpole können innerhalb des Schaltergehäuses bequem parallel zu den Polen geführt werden.

Ein Ausführungsbeispiel der Erfindung soll anhand der anliegenden Figuren näher erläutert werden.

Es zeigen:

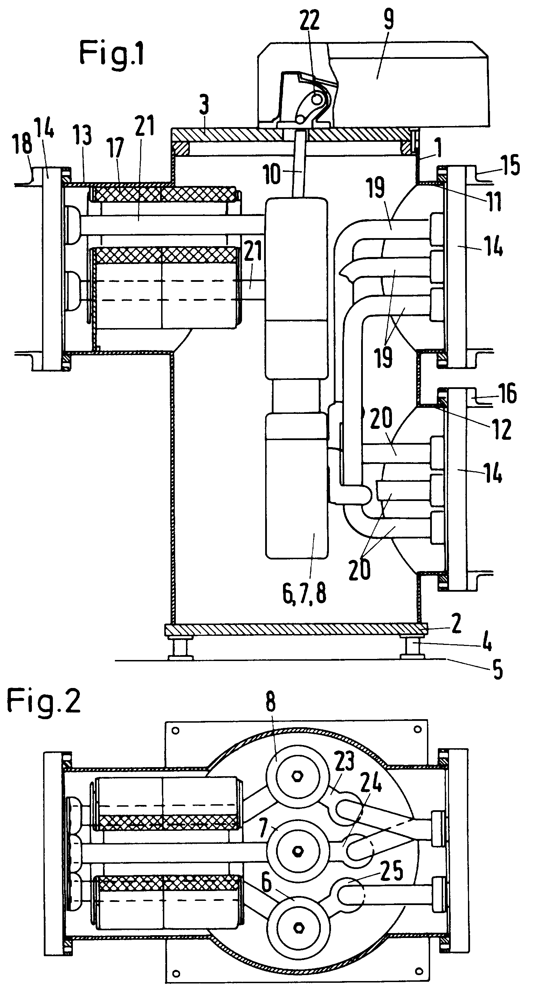

- Figur 1: einen Schnitt durch das Leistungsschaltergehäuse und
- Figur 2: eine Draufsicht auf das abgedeckte Leistungsschaltergehäuse.

Das aufrechtstehende metallene Leistungsschaltergehäuse 1 ist mit Hilfe einer Bodenplatte 2 sowie einer Kopfplatte 3 verschlossen. Über an der Bodenplatte 2 festgemachten Stützen 4 ist es an der Unterlage 5 fest verankert. Im Inneren des Gehäuses 1 sind drei hintereinander auf einer Linie angeordnete Schalterpole 6, 7, 8 vorhanden. Sie werden von dem kopfseitig angeordneten Antrieb 9 betätigt. Dafür durchdringt pro Pol jeweils eine isolierende Antriebsstange 10 die Kopfplatte 3.

An den gegenüberliegenden Außenseiten sind Rohransätze 11, 12, 13 am Schaltergehäuse 1 angeformt. Diese Rohransätze sind jeweils von Isolierdurchführungsplatten 14 verschlossen. An die Rohransätze 11, 12 sind die nicht näher dargestellten Sammelschienengehäuse 15, 16 des vorhandenen Doppelsammelschienensystems angeflanscht.

In den Rohransatz 13 ragen die zylindrischen Aktivteile 17 (Spulenteile) eines Durchführungsstromwandlers. Ein wesentlicher Teil dieser Aktivteile kann im Schaltergehäuse 1 Platz finden, wodurch der Rohransatz 13 sehr kurz ausfällt. Am Rohransatz 13 ist ein Teil des angeflanschten Kabelendverschlußgehäuses 18 zu erkennen.

Die mit den Sammelschienen verbundenen Zuleitungen 19, 20 durchdringen die Isolierdurchführungsplatten 14 versetzt; sie sind demzufolge in den Eckpunkten eines Dreiecks angeordnet. Die Zuleitungen 19 müssen zu den bodenplattenseitigen Anschlüssen der Schalterpole 6, 7, 8 geführt werden. Dazu springen sie aus den drei Ebenen des Dreiecks in eine gemeinsame Ebene, in der sie parallel zu den Schalterpolen 6, 7, 8 in Richtung Bodenplatte 2 nach unten geführt sind. Dort werden sie mit den Zuleitungen 20 zusammengeschaltet und springen - entsprechend versetzt - auf die bodenseitigen Anschlüsse 23, 24, 25 der Schalterpole 6, 7, 8. Die Zuleitungen 20 sind ebenso wie die Zuleitungen 19 in ihrem Horizontalverlauf (längs der Rohransätze 11, 12) in den Eckpunkten eines Dreiecks geführt.

Die kopfplattenseitigen Anschlüsse der Schalterpole 6, 7, 8 sind mit den in den Eckpunkten eines gleichseitigen Dreiecks angeordneten Ausleitungen 21 verbunden. Diese Ausleitungen durchdringen die Aktivteile 17 des Stromwandlers und stützen sich - ebenso wie die Zuleitungen 19, 20 - in den von Flanschen verspannten Isolierdurchführungsplatten 14 ab. Die Leistungsschalterpole 6, 7, 8 besitzen - wie ersichtlich - keinerlei Isolierabstützungen innerhalb des Schaltergehäuses 1. Die Pole werden ausschließlich von den Zuleitungen 19, 20 sowie den Ausleitungen 21 getragen. Dabei wird das Schaltergewicht sowie die beim Schalten entstehenden Reaktionskräfte von den ohnehin vorhandenen Isolierdurchführungsplatten 14 aufgenommen. Dies hat insbesondere bei Hochspannungsschaltanlagen erhebliche Vorteile - wie weiter vorn bereits ausgeführt wurde.

Das Ausführungsbeispiel macht weiterhin augenfällig, welcher zusätzlicher Raum längsseits neben den auf einer Linie hintereinander angeordneten Schalterpolen 6, 7, 8 für die Unterbringungen von Aktivteilen 17 sowie Zuleitungen 19, 20 anfällt. Ein weiterer Vorteil der Schalterpolanordnung ergibt sich noch für den Schalterantrieb 9. Letzterer läßt sich wesentlich einfacher mit einer einzigen Antriebswelle 22, an der die Antriebsstangen 10 angelenkt werden können, realisieren. Bei in den Eckpunkten eines Dreiecks angeordneten Schalterpolen gemäß Stand der Technik sind hingegen zwei solche Antriebswellen erforderlich.

## Patentansprüche

1. Metallgekapseltes, gasisoliertes Hochspannungsschaltfeld mit einem zylindrischen, aufrechtstehenden, als zentrales Tragelement ausgebildeten Leistungsschaltergehäuse (1), in dem drei in axialer Richtung sich erstrekkende Leistungsschalterpole (6, 7, 8) angeordnet sind und an gegenüberliegenden Längsseiten des Gehäuses Rohransätze (11, 12, 13) gebildet sind, durch die in den Eckpunkten eines Dreiecks angeordnete Zu (19, 20)- bzw. Ausleitungen (21) der Leistungsschalterpole (6, 7, 8) geführt werden, welche Rohransätze (11, 12, 13) Flansche bilden, die mit Isolierdurchführungsplatten (14) abgeschlossen sind, dadurch gekennzeichnet, daß die drei Schalterpole (6, 7, 8) auf einer Linie hintereinander angeordnet sind und lediglich durch die Zu- (19, 20) bzw. Ausleitungen (21) im Leistungsschaltergehäuse (1) mechanisch gehalten sind.

2. Schaltfeld nach Anspruch 1, dadurch gekennzeichnet, daß mindestens ein Durchführungsstromwandler vorhanden ist, dessen Aktivteile (17) sich vom zylindrischen Leistungsschaltergehäuse (1) aus in einen daran sich anschließenden Rohransatz (13) erstrecken.

3. Schaltfeld nach einem der Ansprüche 1 oder 2, gekennzeichnet durch zwei übereinander angeordnete, quer zum Leistungsschaltergehäuse geführte Sammelschienengehäuse (15, 16), wobei die Zu- (19, 20) bzw. Ausleitungen (21) für die Sammelschienensysteme mindestens teilweise parallel zu den Schalterpolen (6, 7, 8) innerhalb des Leistungsschaltergehäuses (1) geführt sind.

## Claims

1. Metal-enclosed, gas-insulated, high-voltage switchpanel having a cylindrical, upright circuit-breaker enclosure (1) which is constructed as a central support element, in which three circuit-breaker poles (6, 7, 8) extending in the axial direction are arranged and there are formed on opposite longitudinal sides of the enclosure tube fittings (11, 12, 13) through which there are guided input leads (19, 20) or output leads (21) of the circuit-breaker poles (6, 7, 8) which are arranged at the corner points of a triangle, which tube fittings (11, 12, 13) form flanges which are sealed by means of insulating bushing plates (14), characterised in that the three circuit-breaker poles (6, 7, 8) are arranged sequentially on a line and are retained mechanically in the circuit-breaker enclosure (1) only by the input leads (19, 20) and output leads (21).

2. Switchpanel according to Claim 1, characterised in that at least one bar primary bushing-type current transformer is present the active parts (17) of which extend outwards from the cylindrical circuit-breaker enclosure (1) into a tube fitting (13) adjacent thereto.

3. Switchpanel according to one of Claims 1 or 2, characterised by two busbar housings (15, 16) arranged above one another and guided at right angles to the circuit-breaker enclosure, the input leads (19, 20) or output leads (21) for the busbar systems being guided at least partially parallel to the circuit-breaker poles (6, 7, 8) inside the circuit-breaker enclosure (1).

## Revendications

1. Poste de commutation à haute tension sous enveloppe métallique, isolé au gaz, comprenant une enveloppe de disjoncteur (1) cylindrique, verticale, réalisée en tant qu'élément de support central, dans laquelle sont disposés trois pôles de disjoncteur (6, 7, 8) s'étendant dans la direction axiale et sur les côtés longitudinaux opposés de laquelle se trouvent des embouts tubulaires (11, 12, 13) par lesquels passent des entrées (19, 20) et sorties (21) des pôles de disjoncteur (6, 7, 8), disposées aux angles d'un triangle, lesdits embouts tubulaires formant des brides (11, 12, 13) qui sont obturées par des cloisons isolantes de traversée (14), caractérisé par le fait que les trois pôles de disjoncteur (6, 7, 8) sont disposés sur une ligne les uns derrière les autres et sont maintenus mécaniquement uniquement par les entrées (19, 20) et sorties (21) dans l'enveloppe de disjoncteur (1).

2. Poste de commutation suivant la revendication 1, caractérisé par le fait qu'il comprend au moins un transformateur de courant de traversée dont les parties actives (17) s'étendent depuis l'enveloppe de disjoncteur (1) cylindrique dans un embout tubulaire (13) se raccordant à cette enveloppe.

3. Poste de commutation suivant l'une des revendications 1 et 2, caractérisé par le fait qu'il comprend deux enveloppes de barres omnibus (15, 16) superposées, s'étendant perpendiculairement à l'enveloppe de disjoncteur, les entrées (19, 20) et sorties (21) pour les systèmes de barres omnibus s'étendant au moins en partie parallèlement aux pôles de disjoncteur (6, 7, 8) à l'intérieur de l'enveloppe de disjoncteur (1).
